(19) **Europäisches Patentamt / European Patent Office / Office européen des brevets**

(11) **EP 4 589 349 A1**

(12) # EUROPEAN PATENT APPLICATION
published in accordance with Art. 153(4) EPC

(43) Date of publication:
**23.07.2025  Bulletin 2025/30**

(21) Application number: **23865336.4**

(22) Date of filing: **01.09.2023**

(51) International Patent Classification (IPC):
**G02B 6/12** *(2006.01)*   **G02B 6/125** *(2006.01)*
**G02B 6/42** *(2006.01)*

(52) Cooperative Patent Classification (CPC):
**G02B 6/12; G02B 6/125; G02B 6/42**

(86) International application number:
**PCT/JP2023/032143**

(87) International publication number:
**WO 2024/057981 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022  JP 2022148602
09.12.2022  JP 2022197478**

(71) Applicant: **Kyocera Corporation
Kyoto-shi, Kyoto 612-8501 (JP)**

(72) Inventor: **MATSUI, Naoki
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **OPTICAL INTEGRATED CIRCUIT AND OPTICAL RECEIVER**

(57)  An optical integrated circuit includes wavelength multiplexing/demultiplexing elements. Each wavelength multiplexing/demultiplexing element includes a directional coupler and a delay line. The wavelength multiplexing/demultiplexing elements are connected to each other in a cascade-like manner in multiple stages.

## FIG. 9

**EP 4 589 349 A1**

## Description

### CROSS-REFERENCE TO RELATED APPLICATIONS

This application claims priority of Japanese Patent Application No. 2022-148602 (filed September 16, 2022) and Japanese Patent Application No. 2022-197478 (filed December 9, 2022), the entire disclosures of which are hereby incorporated by reference.

### TECHNICAL FIELD

The present disclosure relates to an optical integrated circuit and an optical receiver.

### BACKGROUND OF INVENTION

In a known wavelength separation element, Mach-Zehnder interferometers are connected to each other in a cascade-like manner (see, for example, Patent Literature 1).

### CITATION LIST

### PATENT LITERATURE

Patent Literature 1: Japanese Unexamined Patent Application Publication No. 2020-194092

### SUMMARY

In an embodiment of the present disclosure, an optical integrated circuit includes wavelength multiplexing/demultiplexing elements. Each wavelength multiplexing/demultiplexing element includes directional coupler and a delay line. The wavelength multiplexing/demultiplexing elements are connected to each other in a cascade-like manner in multiple stages.
In an embodiment of the present disclosure, an optical receiver includes the optical integrated circuit.

### BRIEF DESCRIPTION OF THE DRAWINGS

FIG. 1 is a block diagram illustrating an example configuration of an optical receiver according to an embodiment.
FIG. 2 is a block diagram illustrating an example configuration of an optical receiver when the optical receiver includes an edge coupler as an input unit.
FIG. 3 is a block diagram illustrating an example configuration of an optical receiver obtained when the example configuration in FIG. 2 further includes delayers.
FIG. 4 is a block diagram illustrating an example configuration of an optical receiver obtained when a polarization splitter rotator in the example configuration in FIG. 3 is replaced with a polarization splitter.
FIG. 5 is a block diagram illustrating an example configuration of an optical receiver obtained when delayers connected before photodiodes in the example configuration in FIG. 3 are replaced with variable attenuators.
FIG. 6 is a block diagram illustrating an example configuration of an optical receiver obtained when the example configuration in FIG. 5 further includes delayers between photodiodes and variable attenuators connected before the photodiodes.
FIG. 7A is a sectional view illustrating an example of a strip-type waveguide.
FIG. 7B is a sectional view illustrating an example of a rib-type waveguide.
FIG. 8 is a block diagram illustrating an example configuration of a demultiplexer according to an embodiment.
FIG. 9 is a diagram illustrating an example arrangement of interferometers and ports of the demultiplexer in FIG. 8.
FIG. 10 is a diagram illustrating an example arrangement of interferometer waveguides.
FIG. 11 is a graph illustrating examples of the characteristics of first and third elements of a first group when using strip-type waveguides.
FIG. 12 is a graph illustrating an example of the characteristics of a second element of a first group when using strip-type waveguides.
FIG. 13 is a graph illustrating examples of the characteristics of first, third, fourth elements of a second group when using strip-type waveguides.
FIG. 14 is a graph illustrating examples of the characteristics of second, fifth, and sixth elements of a second group when using strip-type waveguides.
FIG. 15 is a graph illustrating an example of design values of the characteristics of a demultiplexer when using strip-type waveguides.
FIG. 16 is a graph illustrating an example of measured values of the characteristics of a demultiplexer when using strip-type waveguides.
FIG. 17 is a graph illustrating examples of the characteristics of first and third elements of a first group when using rib-type waveguides.
FIG. 18 is a graph illustrating examples of the characteristics of a second element of a first group when using rib-type waveguides.
FIG. 19 is a graph illustrating examples of the characteristics of first, third, and fourth elements of a second group when using rib-type waveguides.
FIG. 20 is a graph illustrating examples of the characteristics of second, fifth, and sixth elements of a second group when using rib-type waveguides.
FIG. 21 is a graph illustrating an example of design values of the characteristics of a demultiplexer when using rib-type waveguides.
FIG. 22 is a graph illustrating an example of measured values of the characteristics of a demultiplexer when using rib-type waveguides.

FIG. 23 is a diagram illustrating an example configuration of a wavelength multiplexing/demultiplexing element including resistance elements.

FIG. 24 is a diagram illustrating an example of the positional relationship between a resistance element and a waveguide.

FIG. 25A is a graph illustrating examples of the wavelength characteristics of a wavelength multiplexing/demultiplexing element using strip-type waveguides.

FIG. 25B is a graph illustrating examples of the wavelength characteristics of a wavelength multiplexing/demultiplexing element using rib-type waveguides.

## DESCRIPTION OF EMBODIMENTS

As a characteristic of silicon photonics elements, insertion loss or crosstalk between output ports is important. Sufficient crosstalk or insertion loss characteristics are required on silicon photonics chips. In the present disclosure, an optical integrated circuit and an optical receiver allow wavelength multiplexing/demultiplexing elements having robustness against manufacturing tolerances to be provided.

Direct-modulation direct-detection methods are widely used in optical communication in data centers due to the convenience and low power consumption of digital signal processors. On the other hand, as the amount of optical communication traffic in data centers increases, higher-density data transmission is required, and optical transceivers including silicon-based optical integrated circuits, in particular, compact wavelength multiplexing optical circuits, are being considered. In this case, a series Mach-Zehnder interference system or arrayed waveguide gratings can be used as wavelength multiplexing optical circuits realized using silicon. All of these wavelength multiplexing optical circuits are characterized by the fact that their characteristics vary greatly depending on the polarization of light. On the other hand, single-mode optical fibers are widely used in existing optical fiber networks in data centers. However, this type of optical fiber does not have polarization-maintaining characteristics. Therefore, the polarization of light changes randomly each time light passes through curved portions or connecting portions of wiring. Therefore, in order to ensure that the characteristics of an optical receiver are uniform regardless of the polarization, a polarization splitter rotator needs to be provided in a former stage of an optical circuit, and the incident light needs to be split into TE (transverse electric) and TM (transverse magnetic) components, and each of these components needs to be input into a separate wavelength multiplexing optical circuit. In a direct-modulation direct-polarization method, after the light is polarized to either TE or TM, the outputs of wavelength multiplexing optical circuits are received by photodiodes and the sums of the outputs of the photodiodes corresponding to the respective polarization components need to be detected.

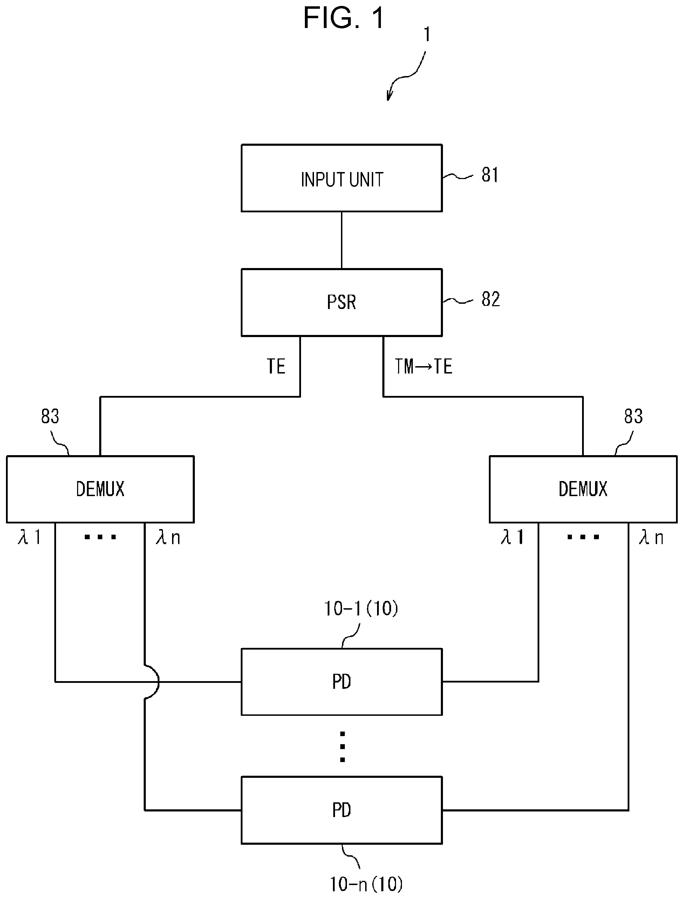

In an embodiment of the present disclosure, an optical receiver 1 (see FIG. 1 etc.) may be used in combination with a configuration for transmitting optical signals in an optical communication system. The configuration for transmitting optical signals may include a light source and a modulator.

The light source may include a semiconductor laser such as an LD (laser diode) or a VCSEL (vertical cavity surface emitting laser). The light source may include a device that emits electromagnetic waves of various wavelengths, not limited to visible light. The modulator modulates electromagnetic waves by changing the intensity of the electromagnetic waves. The modulator may pulse modulate the electromagnetic waves, for example.

The configuration for transmitting optical signals may further include a signal input unit. The signal input unit accepts input of signals from external devices, etc. The signal input unit may include a D/A converter, for example. The signal input unit outputs a signal to a modulator. The modulator modulates electromagnetic waves based on a signal acquired by the signal input unit.

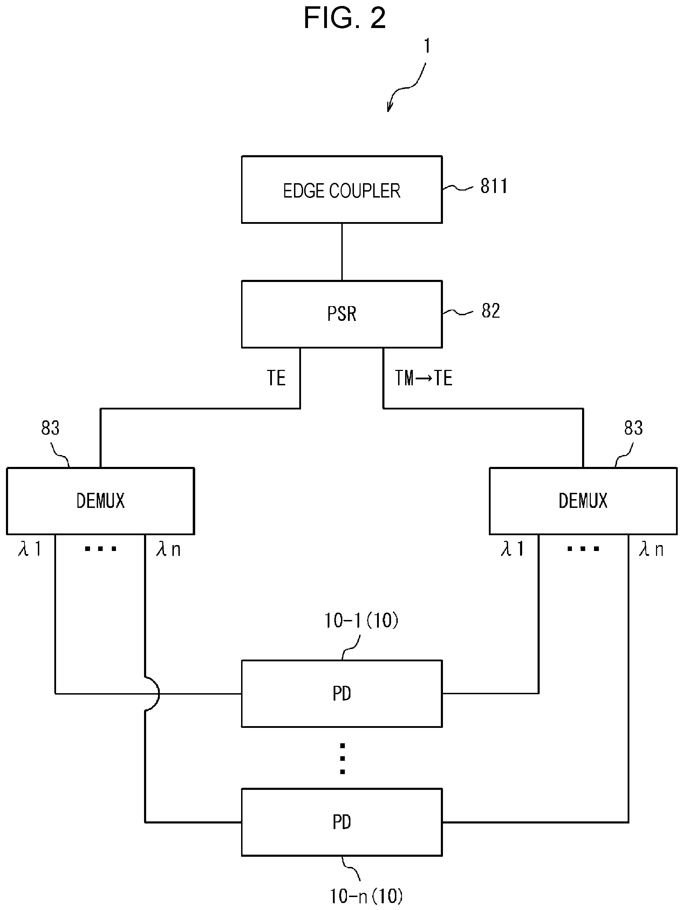

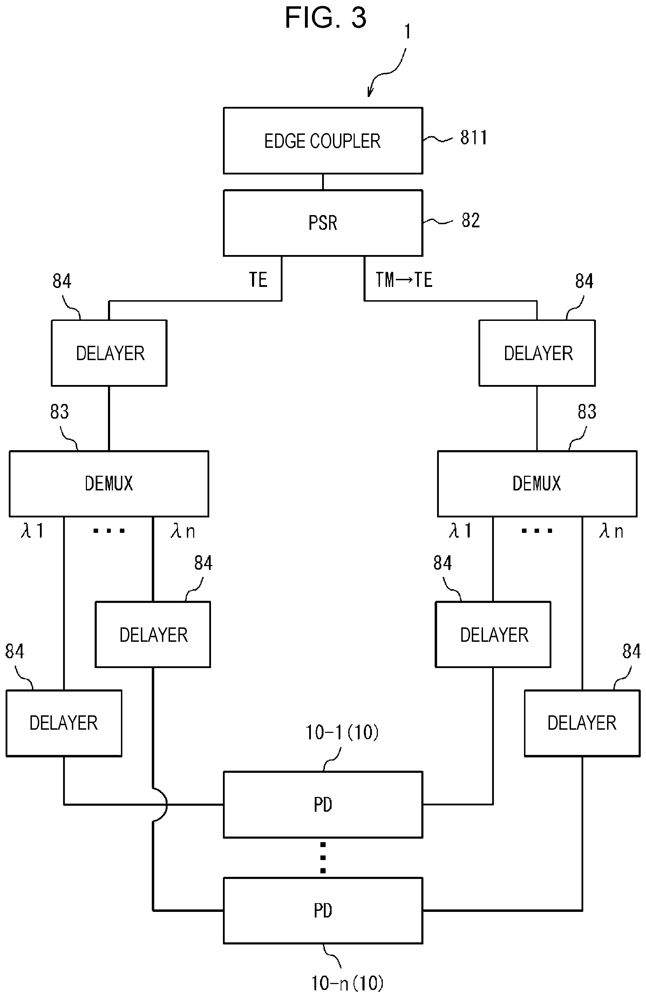

As illustrated in FIG. 2, the optical receiver 1 may include an edge coupler 811 as an input unit 81. As illustrated in FIG. 3, the optical receiver 1 may further include delayers 84 between a polarization splitter rotator 82 and each of two demultiplexers 83, and between the demultiplexers 83 and each of n photodiodes 10-1 to n. The delayers 84 delay the propagation of optical signals. The optical receiver 1 compensates for variations between the delays in the optical signals caused by manufacturing errors in the waveguides using the delayers 84. As a result of the optical receiver 1 including the delayers 84, jitter of combined signals consisting of a TE-mode optical signal and a TE-mode optical signal converted from the TM-mode optical signal output from the photodiodes 10 can be reduced.

The delayers 84 may be, for example, configured as waveguides having a prescribed length, and the effective refractive index of the waveguides may be adjustable using a heater. The delayers 84 may be configured as phase modulators having a prescribed length and may be configured so that the amount of phase modulation can be adjusted by applying a voltage.

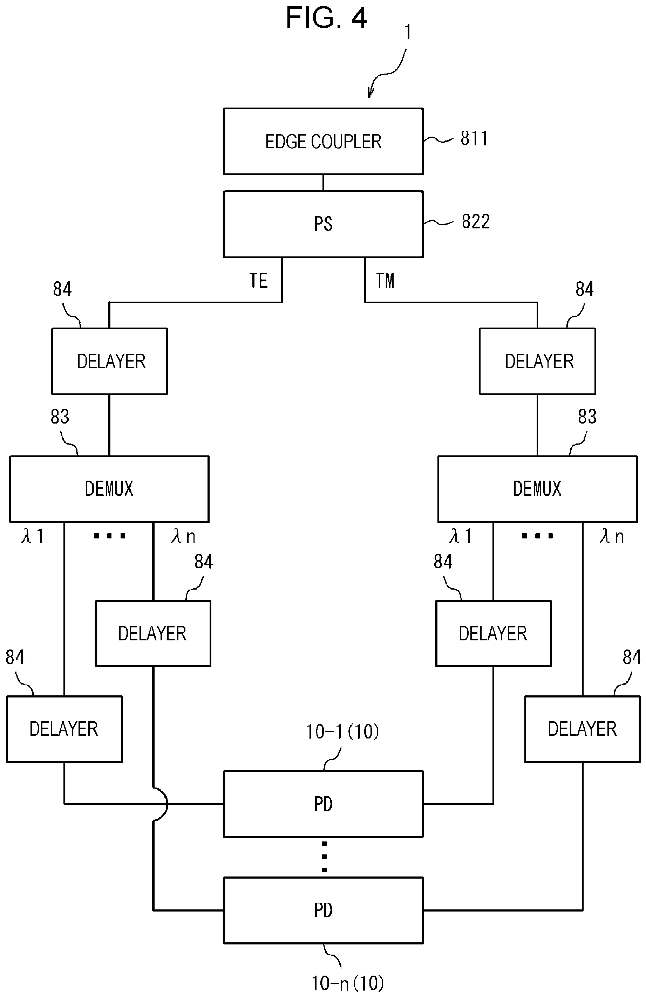

As illustrated in FIG. 4, the polarization splitter rotator 82 in the optical receiver 1 may be replaced with a polarization splitter (PS) 822. The polarization splitter 822 splits an input optical signal into a TE-mode optical signal and a TM-mode optical signal. The TE-mode optical signal and the TM-mode optical signal have different propagation speeds from each other. The optical receiver 1 may include the delayers 84 to compensate for differences in delay between the TE-mode optical signal and the TM-mode optical signal.

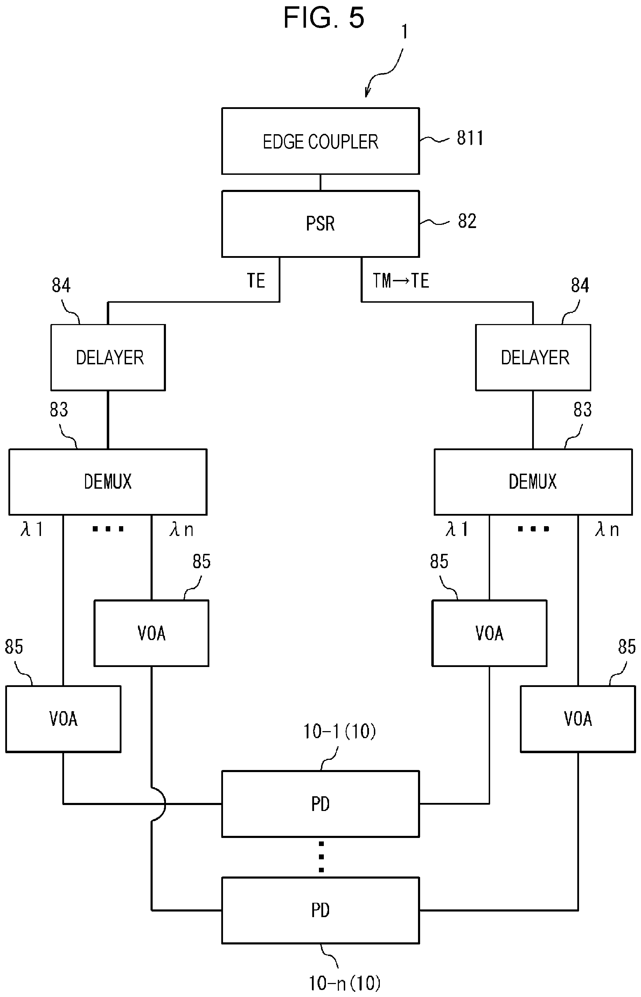

As illustrated in FIG. 5, the delayers 84 connected between the demultiplexers 83 and each of the n photodiodes 10-1 to n in the optical receiver 1 illustrated in FIG. 2 may be replaced with variable optical attenuators (VOAs) 85. The variable optical attenuators 85 may include silicon pin diodes, for example. The variable optical attenuators 85 absorb light and attenuate light intensity in response to being injected with a current. By adjusting the current injected into each variable optical attenuator 85, the optical loss that occurs in the polarization splitter rotator 82 or the demultiplexer 83 can be compensated for. Therefore, even if optical loss in the polarization splitter rotator 82 or the demultiplexers 83 is not uniform due to differences in the polarization or wavelength of the optical signals, the light-reception sensitivity of optical signals with any polarization or wavelength can be made to approach uniformity by decreasing the current values of the variable optical attenuators 85 through which optical signals having high optical loss pass and increasing the current values of the variable optical attenuators 85 through which optical signals having low optical loss pass.

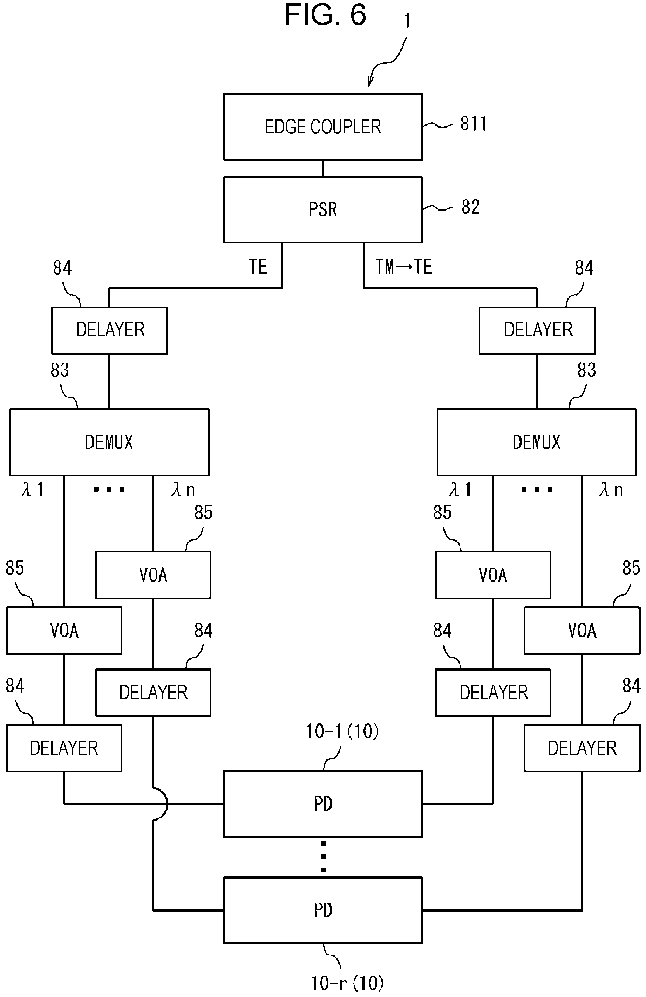

As illustrated in FIG. 6, the optical receiver 1 may include both variable optical attenuators 85 and delayers 84 between the demultiplexers 83 and each of the n photodiodes 10-1 to n.

As described above, in this embodiment, the optical receiver 1 can detect an optical signal using the photodiodes 10 configured to reduce return light. Optical signals returning to the input unit 81 can be reduced as a result of the return light being reduced. Stable operation of a light source or modulator that transmits an optical signal to the input unit 81 can be maintained by reducing optical signals returning to the input unit 81. As a result, the reliability of an optical communication system using the optical receiver 1 can be improved.

(Example Configuration of Optical Integrated Circuit)

An optical integrated circuit may include the demultiplexer 83. The demultiplexer 83 may function as a wavelength multiplexing/demultiplexing element that not only separates electromagnetic waves that contain multiple wavelength components into each wavelength component, but also combines multiple different wavelength components as electromagnetic waves that contain multiple wavelength components.

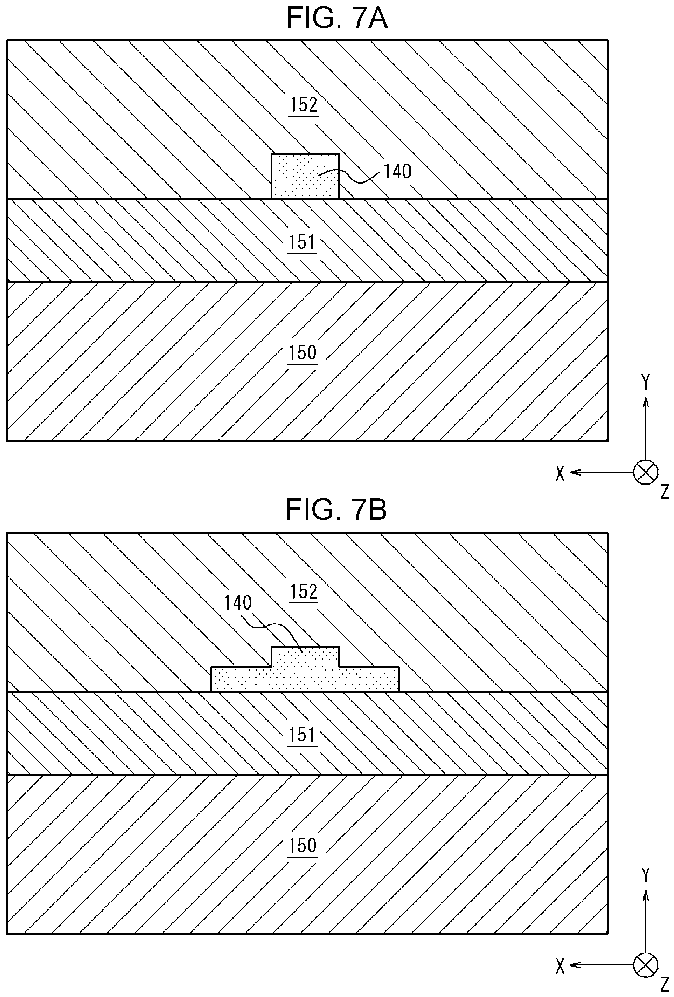

The demultiplexer 83 may include a directional coupler and a delay line. The directional coupler or the delay line may include a waveguide 140. The waveguide 140 may be configured as a strip-type waveguide as illustrated in FIG. 7A, or may be configured as a rib-type waveguide as illustrated in FIG. 7B. Strip-type waveguides have a rectangular cross-sectional shape. At least part of the cross-sectional shape of rib-type waveguides is shaped like a protrusion.

The waveguide 140 may be formed to include silicon. The waveguide 140 may be formed on a silicon substrate 150. The substrate 150 may include an insulating layer 151 and a cladding layer 152. The waveguide 140 may be surrounded by the insulating layer 151 and the cladding layer 152. Since the waveguide 140 is formed from silicon, the wavelength multiplexing/demultiplexing element can be easily manufactured using silicon photonics technology. The waveguide 140 may be formed of various other dielectric materials, not limited to silicon.

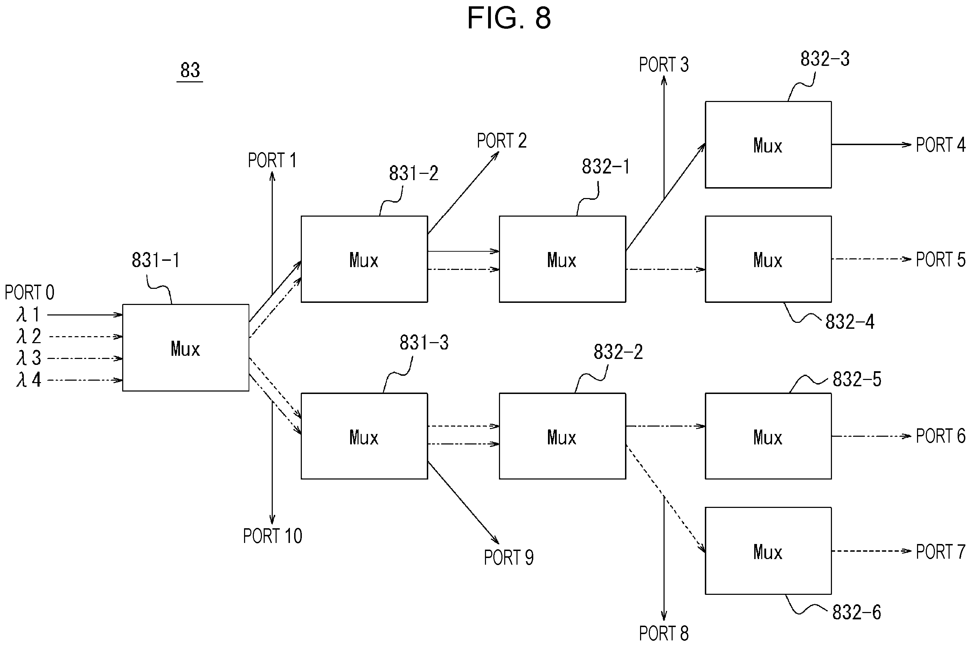

The demultiplexer 83 may include wavelength multiplexing/demultiplexing elements (Mux) that are connected in a cascade-like manner in multiple stages, as illustrated in FIG. 8. The demultiplexer 83 may include cascade delay Mach-Zehnder interferometers (CMZI). Let us suppose that the electromagnetic waves input to a port 0 of the demultiplexer 83 contain components of four wavelengths. The wavelengths are represented as $\lambda 1$, $\lambda 2$, $\lambda 3$, and $\lambda 4$. In this example configuration, the wavelengths have the following values.

$$\lambda 1 = 1.27 \ \mu m$$

$$\lambda 2 = 1.29 \ \mu m$$

$$\lambda 3 = 1.31 \ \mu m$$

$$\lambda 4 = 1.33 \ \mu m$$

The demultiplexer 83 may be configured to separate the electromagnetic waves into two sets of electromagnetic waves using a combination of a first element 831-1, a second element 831-2, and a third element 831-3 of a first group, and output one set of electromagnetic waves from the second element 831-2 and the other set of electromagnetic waves from the third element 831-3. In the example in FIG. 8, electromagnetic waves including $\lambda 1$ and $\lambda 3$ are output from the second element 831-2. Electromagnetic waves including $\lambda 2$ and $\lambda 4$ are output from the third element 831-3.

The demultiplexer 83 may be configured to separate the electromagnetic waves output from the second element 831-2 of the first group into two sets of electromagnetic waves using a combination of a first element 832-1, a third element 832-3, and a fourth element 832-4 of a second group, and output one set of electromagnetic waves from the third element 832-3 and the other set of electromagnetic waves from the fourth element 832-4. **In** the example in FIG. 8, electromagnetic waves including $\lambda 1$ are output from a port 4 connected to an output of the third element 832-3. Electromagnetic waves including $\lambda 3$ are output from a port 5 connected to an output of the fourth element 832-4.

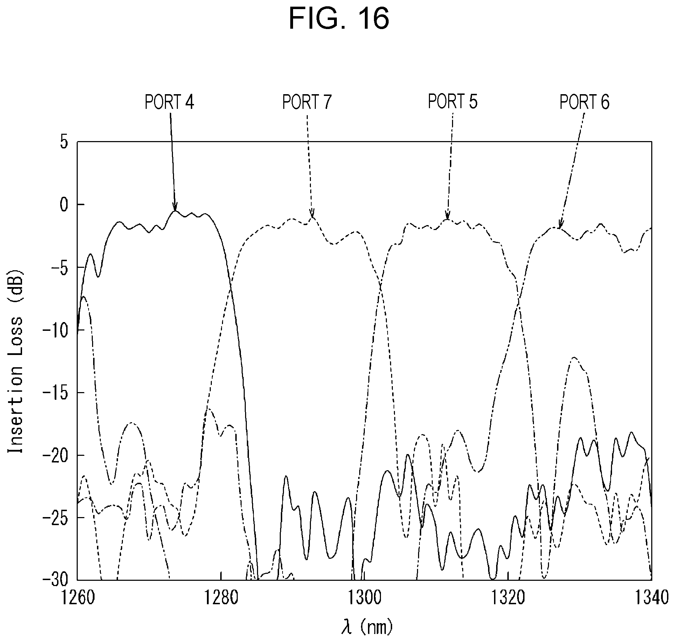

The demultiplexer 83 may be configured to separate the electromagnetic waves output from the third element 831-3 of the first group into two sets of electromagnetic waves using a combination of a second element 832-2, a fifth element 832-5, and a sixth element 832-6 of the second group, and output one set of electromagnetic waves from the fifth element 832-5 and the other set of electromagnetic waves from the sixth element 832-6. In the example in FIG. 16, electromagnetic waves including λ2 are output from a port 7 connected to an output of the sixth element 832-6. Electromagnetic waves including λ4 are output from a port 6 connected to an output of the fifth element 832-5.

In other words, the demultiplexer 83 includes wavelength multiplexing/demultiplexing elements including directional couplers and delay lines. In the demultiplexer 83, the wavelength multiplexing/demultiplexing elements are connected to each other in a cascade-like manner in multiple stages. The wavelength multiplexing/demultiplexing elements may be connected in four stages. The wavelength multiplexing/demultiplexing elements constituting the first group of the demultiplexer 83 are also referred to as a first composite element. The wavelength multiplexing/demultiplexing elements constituting the second group of the demultiplexer 83 are also referred to as a second composite element. In the demultiplexer 83, the first composite element and the second composite element may be connected to each other in a cascade-like manner. In the example in FIG. 8, in the first group of the demultiplexer 83, the wavelength multiplexing/demultiplexing elements are connected to each other in a cascade-like manner in two stages. In other words, in the first composite element, the wavelength multiplexing/demultiplexing element are connected to each other in a cascade-like manner in two stages. In the second group of the demultiplexer 83, the wavelength multiplexing/demultiplexing elements are connected to each other in a cascade-like manner in two stages. In other words, in the second composite element, the wavelength multiplexing/demultiplexing element are connected to each other in a cascade-like manner in two stages. In the first composite element, the wavelength multiplexing/demultiplexing elements may be connected to each other in N stages. In the second composite element, the wavelength multiplexing/demultiplexing elements may be connected to each other in M stages. N and M are natural numbers.

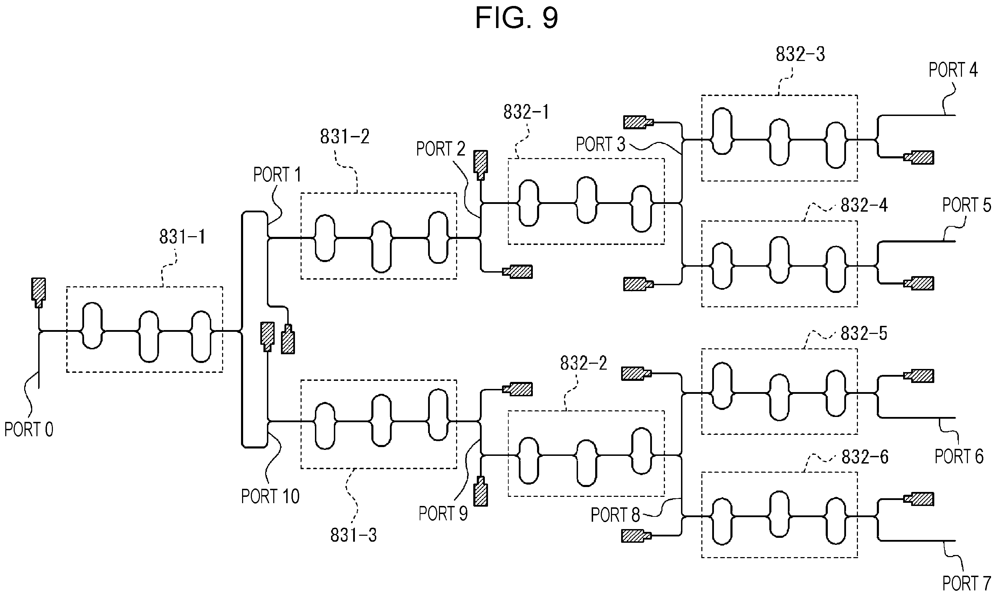

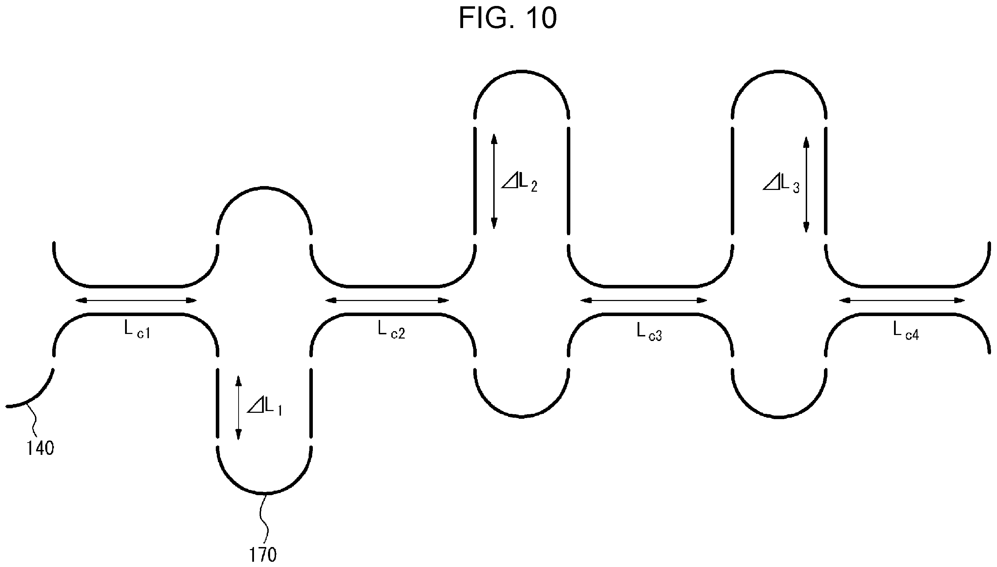

The waveguides and ports of the demultiplexer 83 may be disposed as illustrated in FIG. 9. The terminal of a line paired with a line representing a port represents a termination. Each wavelength multiplexing/demultiplexing element may be configured as illustrated in FIG. 10. The wavelength multiplexing/demultiplexing element includes first parts each configured such that two waveguides 140 are positioned alongside each other and second parts that each include a delay line 170 such that the two waveguides 140 thereof are of different lengths. The wavelength multiplexing/demultiplexing element illustrated in FIG. 10 includes four first parts and three second parts between the first parts. In FIG. 10, the lengths of the four first parts are represented as Lc1, Lc2, Lc3, and Lc4, respectively. The differences in one-way length of the two waveguides 140 in the three second parts are expressed as ΔL1, ΔL2, and ΔL3, respectively. That is, the differences in the round trip lengths of the two waveguides 140 in the three second parts are expressed as ΔL1×2, ΔL2×2, and ΔL3×2, respectively. The units are μm (micrometers). The structure of each wavelength multiplexing/demultiplexing element can be specified using these seven parameters.

Each wavelength multiplexing/demultiplexing element includes two waveguides 140 that are physically connected to each other. The two waveguides 140 are electromagnetically coupled with each other in the first parts. When electromagnetic waves input to one of the two waveguides 140 are output from the same waveguide 140 without being altered, the output port is also referred to as a straight port. In other words, the wavelength multiplexing/demultiplexing element includes an output port on a straight side of the directional coupler. A straight port is a port that is physically connected by the waveguide 140 from the input port of the electromagnetic waves.

When electromagnetic waves input to one of the two waveguides 140 is transferred to the other waveguide 140 and then output, the output port is also referred to as a cross port. In other words, the wavelength multiplexing/demultiplexing element includes an output port on a cross side of the directional coupler. A cross port is a port that is electromagnetically coupled but not physically connected by the waveguide 140 from the input port of the electromagnetic waves.

Among the multiple wavelength multiplexing/demultiplexing elements in the demultiplexer 83, wavelength multiplexing/demultiplexing elements connected later than the first stage may include an output port on the straight side of the directional coupler. In addition, when the first group of the demultiplexer 83 includes wavelength multiplexing/demultiplexing elements connected in N stages and the second group of the demultiplexer 83 includes wavelength multiplexing/demultiplexing elements connected in M stages, the wavelength multiplexing/demultiplexing elements connected from the second stage to the Nth stage, or from the N+2th stage to the N+Mth stage may include an output port on the straight side of the directional coupler. In other words, wavelength multiplexing/demultiplexing elements that do not split the output in the demultiplexer 83 may include an output port on the straight side of the directional coupler. On the other hand, the wavelength multiplexing/demultiplexing element of the first stage of the first group and the wavelength multiplexing/demultiplexing elements of the N+1th stage of the second group, which split the output in the demultiplexer 83, include output ports on both the straight side and the cross side of the directional couplers.

The output to the cross port is sensitive to manufacturing tolerances of the element. In other words, the sensitivity of the output to the cross port to the manufacturing tolerances of the element is large. As a result of the demultiplexer 83 including the output port on the straight side of the directional coupler, the effects of manufacturing tolerances of the element can be reduced. For example, the second element 831-2 of the first group may be designed so that output from the side of the first element 831-1 of the first group (second element 831-2 side) from which output is performed to a cross port is made to a straight port in the second element 831-2.

The characteristics of the wavelength multiplexing/demultiplexing elements may differ depending on whether the waveguides 140 are strip-type waveguides or rib-type waveguides. Hereafter, the characteristics of the wavelength multiplexing/demultiplexing elements will be described for the case when the waveguides 140 are strip-type waveguides and for the case when the waveguides 140 are rib-type waveguides.

<Case When Waveguides 140 are Strip-Type Waveguides>

The first element 831-1 and the third element 831-3 of the first group in FIG. 8 or FIG. 9 have the following parameters.

$$Lc1 = 40, Lc2 = 25, Lc3 = 20, Lc4 = 10$$

$$\Delta L1 = 9.6/2, \Delta L2 = 9.6, \Delta L3 = 9.5$$

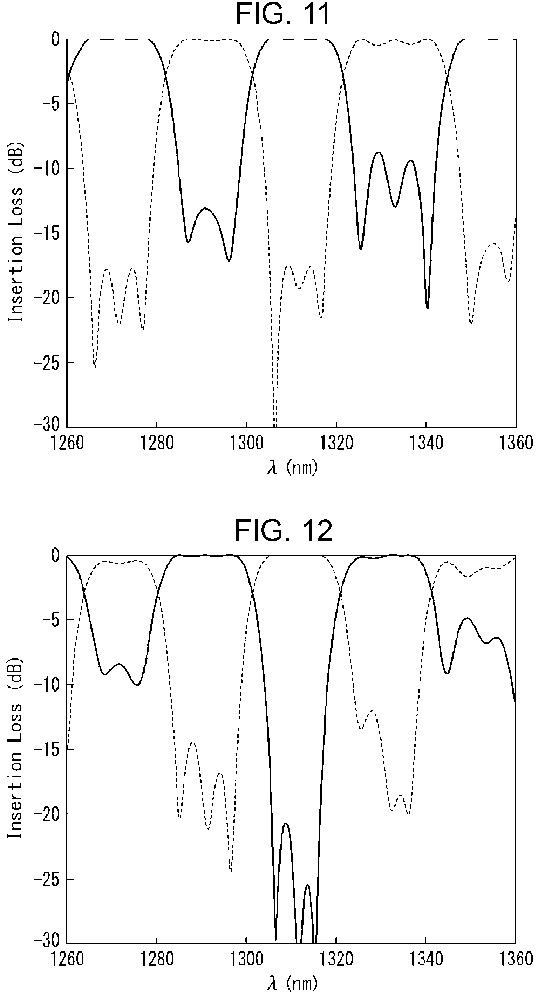

The characteristics of the first element 831-1 and the third element 831-3 of the first group in this case are illustrated in the graph in FIG. 11. In the graph in FIG. 11, the horizontal axis represents wavelength. The units of wavelength are assumed to be nm (nanometers). The vertical axis represents insertion loss. The units of insertion loss are assumed to be dB (decibels). The larger the value on the vertical axis is (as the plot of the graph rises), the smaller the loss is. The solid line represents the output of a straight port. The dashed line represents the output of a cross port. The vertical and horizontal axes of the graphs, as well as the meanings of the solid and dashed lines, are the same and/or similar in the following FIGs. 12 to 14 and FIGs. 17 to 20.

The second element 831-2 of the first group in FIG. 8 or FIG. 9 has the following parameters.

$$Lc1 = 35, Lc2 = 25, Lc3 = 25, Lc4 = 10$$

$$\Delta L1 = 9.9/2, \Delta L2 = 9.9, \Delta L3 = 9.8$$

The characteristics of the second element 831-2 of the first group in this case are illustrated in the graph in FIG. 12.

The first element 832-1, the third element 832-3, and the fourth element 832-4 of the second group in FIG. 8 or FIG. 9 have the following parameters.

$$Lc1 = 35, Lc2 = 25, Lc3 = 15, Lc4 = 5$$

$$\Delta L1 = 5.2/2, \Delta L2 = 5.2, \Delta L3 = 5.1$$

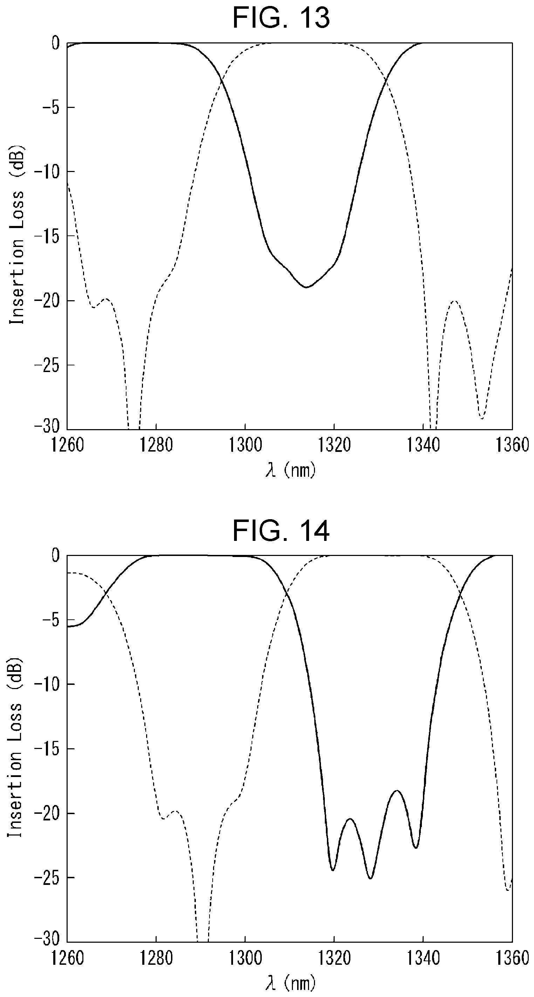

The characteristics of the first element 832-1, the third element 832-3, and the fourth element 832-4 of the second group in this case are illustrated in the graph in FIG. 13.

The second element 832-2, the fifth element 832-5, and the sixth element 832-6 of the second group in FIG. 8 or FIG. 9 have the following parameters.

$$Lc1 = 35, Lc2 = 25, Lc3 = 15, Lc4 = 5$$

$$\Delta L1 = 5.3/2, \Delta L2 = 5.3, \Delta L3 = 5.2$$

The characteristics of the second element 832-2, the fifth element 832-5, and the sixth element 832-6 of the second group in this case are illustrated in the graph in FIG. 14.

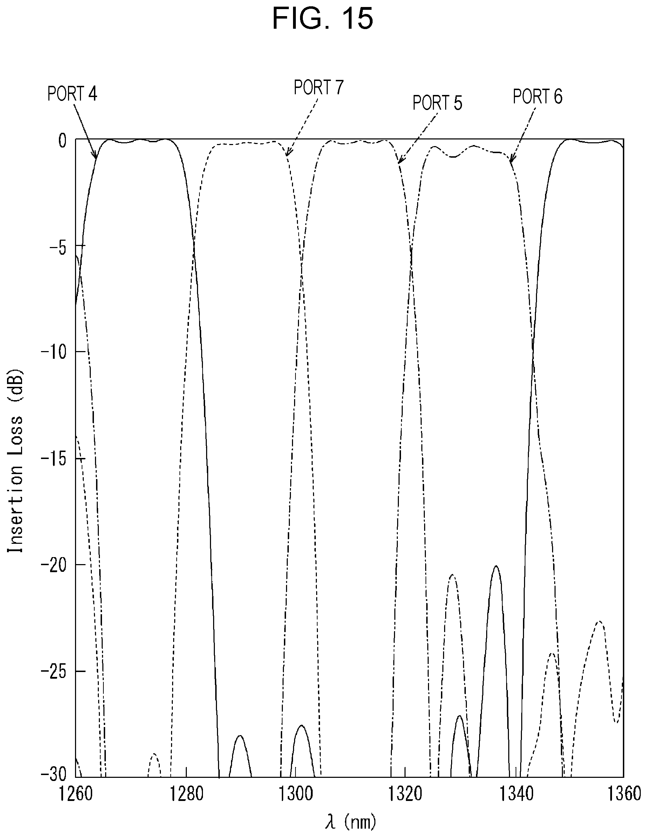

When the wavelength multiplexing/demultiplexing elements have the characteristics described above, the design values of the output characteristics of the ports 4 to 7 of the demultiplexer 83 are illustrated in FIG. 15. The measured values of the output characteristics of the ports 4 to 7 of the demultiplexer 83 are illustrated in FIG. 16. In the graphs in FIGs. 15 and 16, the horizontal axis represents wavelength. The units of wavelength are assumed to be nm (nanometers). The vertical axis represents insertion loss. The units of insertion loss are assumed to be dB (decibels). Let us suppose that electromagnetic waves containing components with wavelengths of $\lambda1$ to $\lambda4$ are input to a port of the demultiplexer 83. In FIG. 15 and FIG. 16, the measured values of the component output from the port 4 are illustrated by a solid line. The measured values of the component output from the port 7 are illustrated by a dashed line. The measured values of the component output from the port 5 are illustrated by a single-dot dashed line. The measured values of the component output from the port 6 are illustrated by a two-dot dashed line. As illustrated in the graphs in FIG. 15 and FIG. 16, for both the design values and the measured values, the component output from each port contains many components at different wavelengths. In other words, in the measurement results, the demultiplexer 83 configured with strip-type waveguides is able to separate components of each wavelength from $\lambda1$ to $\lambda4$. As a result, insertion loss characteristics and crosstalk characteristics can be improved.

<Case When Waveguides 140 are Rib-Type Waveguides>

The first element 831-1 and the third element 831-3 of the first group in FIG. 8 or FIG. 9 have the following parameters.

$$Lc1 = 55, Lc2 = 35, Lc3 = 30, Lc4 = 10$$

$$\Delta L1 = 10.4/2, \Delta L2 = 10.4, \Delta L3 = 10.3$$

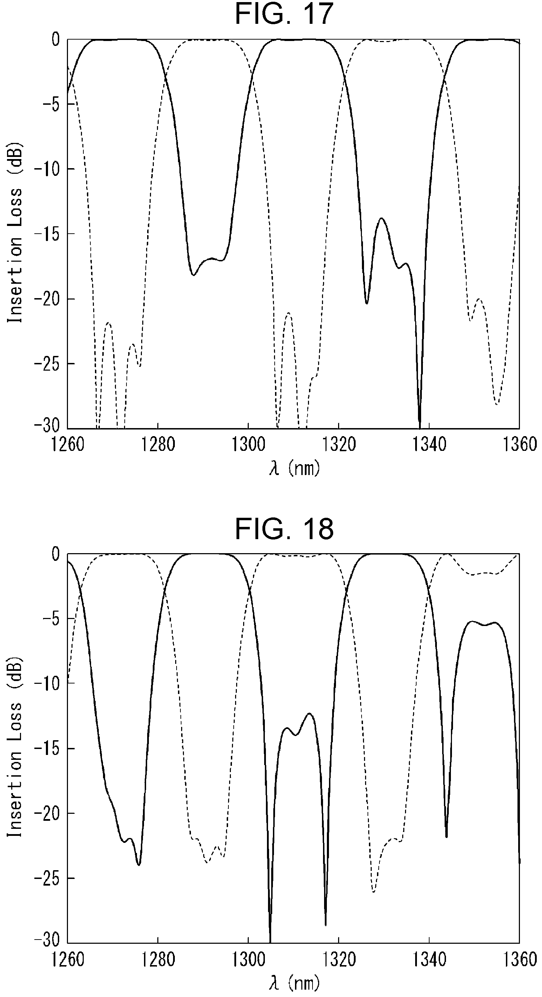

The characteristics of the first element 831-1 and the third element 831-3 of the first group in this case are illustrated in the graph in FIG. 17.

The second element 831-2 of the first group in FIG. 8 or FIG. 9 has the following parameters.

$$Lc1 = 65, Lc2 = 40, Lc3 = 30, Lc4 = 10$$

$$\Delta L1 = 10.7/2, \Delta L2 = 10.7, \Delta L3 = 10.5$$

The characteristics of the second element 831-2 of the first group in this case are illustrated in the graph in FIG. 18.

The first element 832-1, the third element 832-3, and the fourth element 832-4 of the second group in FIG. 8 or FIG. 9 have the following parameters.

$$Lc1 = 55, Lc2 = 40, Lc3 = 25, Lc4 = 10$$

$$\Delta L1 = 5.3/2, \Delta L2 = 5.3, \Delta L3 = 5.2$$

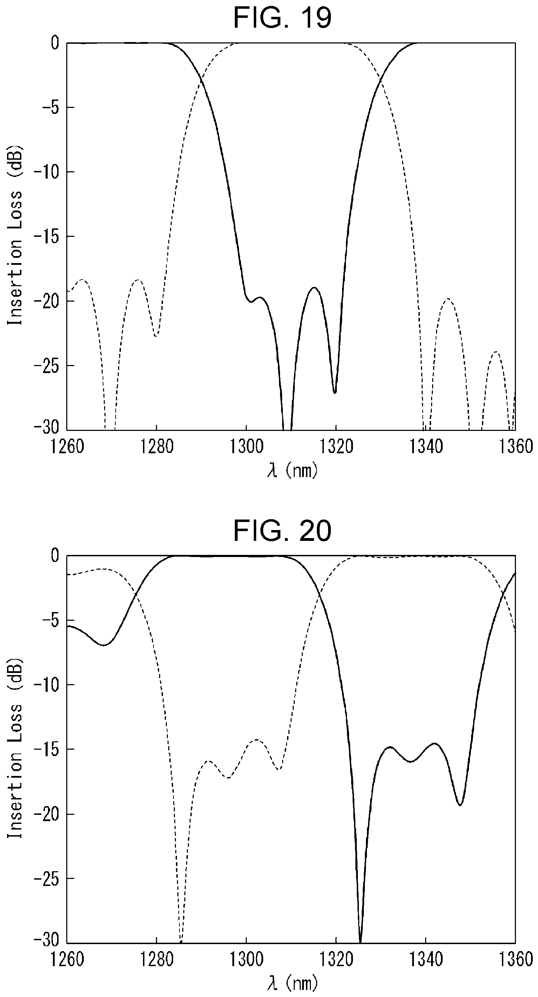

The characteristics of the first element 832-1, the third element 832-3, and the fourth element 832-4 of the second group in this case are illustrated in the graph in FIG. 19.

The second element 832-2, the fifth element 832-5, and the sixth element 832-6 of the second group in FIG. 8 or FIG. 9 have the following parameters.

$$Lc1 = 50, Lc2 = 30, Lc3 = 25, Lc4 = 15$$

$$\Delta L1 = 5.5/2, \Delta L2 = 5.5, \Delta L3 = 5.4$$

The characteristics of the second element 832-2, the fifth element 832-5, and the sixth element 832-6 of the second group in this case are illustrated in the graph in FIG. 20.

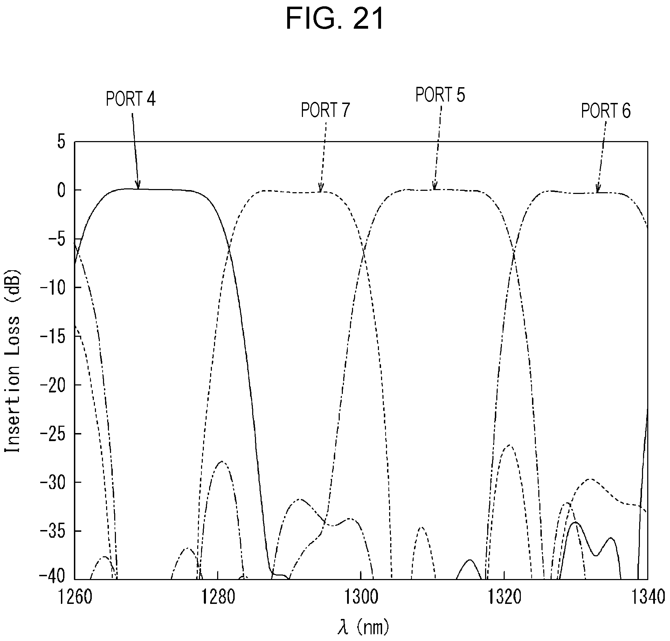

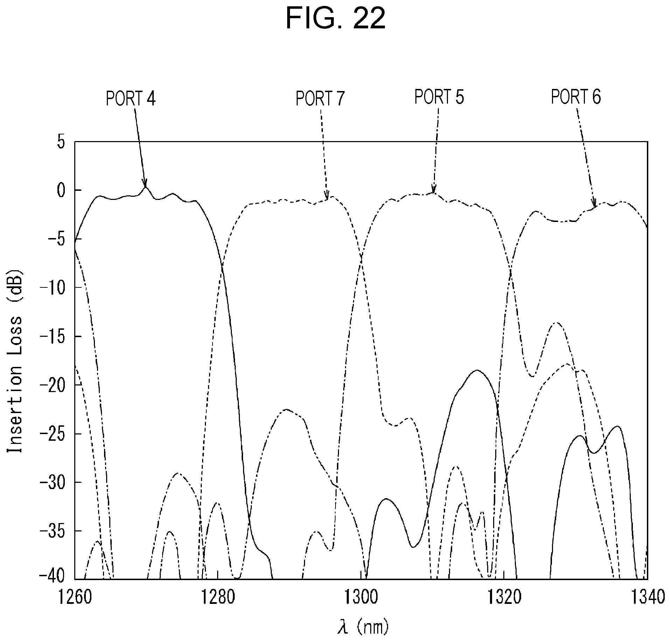

When the wavelength multiplexing/demultiplexing elements have the characteristics described above, the design values of the output characteristics of the ports 4 to 7 of the demultiplexer 83 are illustrated in FIG. 21. The measured values of the output characteristics of the ports 4 to 7 of the demultiplexer 83 are illustrated in FIG. 22. In the graphs in FIGs. 21 and 22, the horizontal axis represents wavelength. The units of wavelength are assumed to be nm (nanometers). The vertical axis represents insertion loss. The units of insertion loss are assumed to be dB (decibels). Let us suppose that electromagnetic waves containing components with wavelengths of $\lambda1$ to $\lambda4$ are input to a port of the demultiplexer 83. In FIG. 21 and FIG. 22, the measured values of the component output from the port 4 are illustrated by a solid line. The measured values of the component output from the port 7 are illustrated by a dashed line. The measured values of the component output from the port 5 are illustrated by a single-dot dashed line. The measured values of the component output from the port 6 are illustrated by a two-dot dashed line. As illustrated in the graphs in FIG. 21 and FIG. 22, for both the design values and the measured values, the component output from each port contains many components at different wavelengths. In other words, in the measurement results, the demultiplexer 83 configured with rib-type waveguides is able to separate the components of each wavelength from $\lambda1$ to $\lambda4$. As a result, insertion loss characteristics and crosstalk characteristics can be improved.

<Summary>

As described above, in this embodiment, the optical integrated circuit includes wavelength multiplexing/demultiplexing elements connected in a cascade-like manner in multiple stages. Connecting multiple wavelength multiplexing/demultiplexing elements in a cascade-like manner allows sufficient crosstalk to be realized. In addition, wavelength separation can be achieved with little insertion loss. As a result, insertion loss characteristics and crosstalk characteristics can be improved.

(Compensation Circuit)

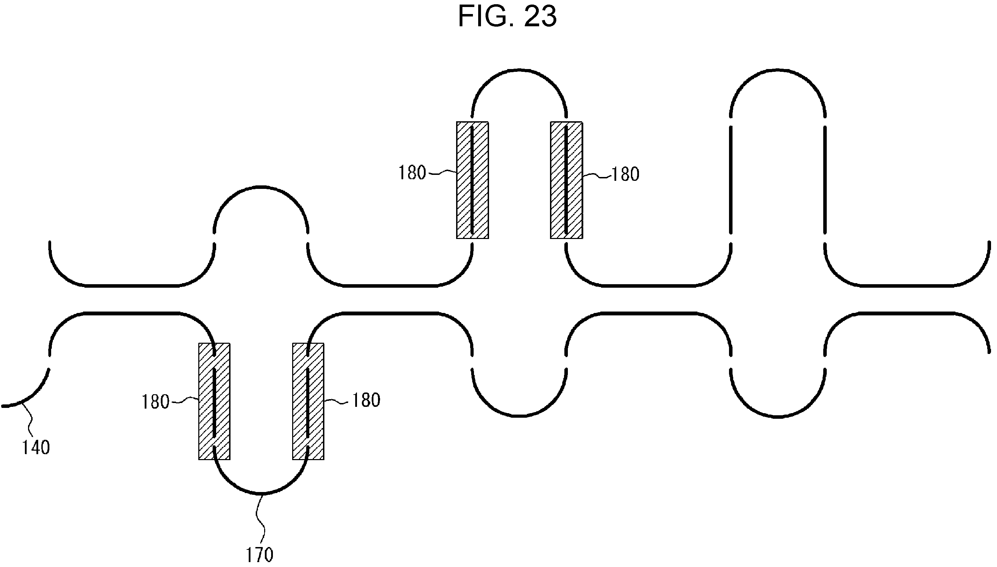

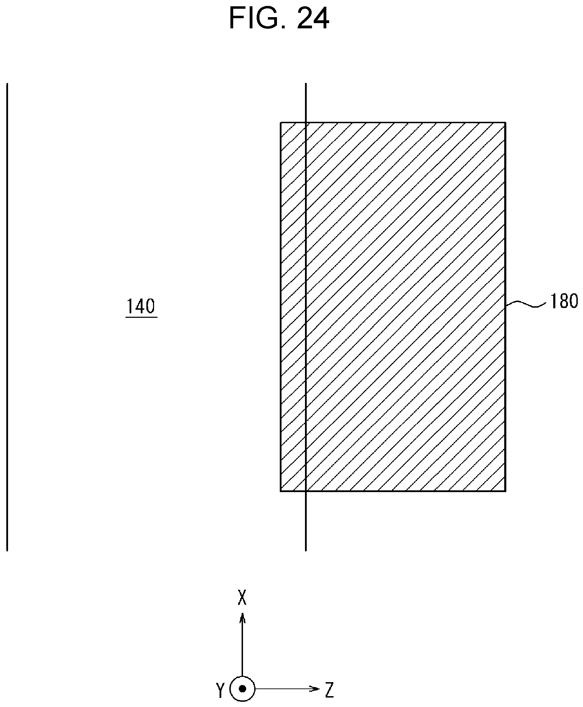

As illustrated in FIG. 23, the wavelength multiplexing/demultiplexing elements may include the waveguides 140 positioned on the substrate and resistance elements 180. Each resistance element 180 is configured to heat the corresponding waveguide 140 and change the temperature of the waveguide 140 through the heat generated by a current flowing through the resistance element 180. The resistance element 180 may be positioned to overlap the waveguide 140. The resistance element 180 may be positioned to overlap at least part of the waveguide 140 in plan view of the substrate, as illustrated in FIG. 24. The resistance element 180 may be positioned to not overlap the waveguide 140 in plan view of the substrate so long as the temperature of the waveguide 140 can be made to change.

The resistance element 180 may be configured using, for example, titanium nitride (TiN) as a material. The resistance element 180 is not limited to TiN and may be configured using a variety of other conductive materials compatible with the process of forming the waveguide 140 on the substrate.

The wavelength multiplexing/demultiplexing element may change the temperature of at least part of the waveguide 140 by passing a current through the resistance element 180. A change in temperature of at least part of the waveguide 140 changes the refractive index of at least part of the waveguide 140. A change in the refractive index of at least part of the waveguide 140 changes the wavelength characteristics of the wavelength multiplexing/demultiplexing element. Therefore, the wavelength characteristics of the wavelength multiplexing/demultiplexing element can be changed by the wavelength multiplexing/demultiplexing element changing the temperature of at least part of the waveguide 140. The wavelength characteristics of the wavelength multiplexing/demultiplexing element can vary due to manufacturing tolerances or ambient conditions. As a result of the wavelength multiplexing/demultiplexing element including the resistance elements 180, the wavelength multiplexing/demultiplexing element can compensate for variations in wavelength characteristics.

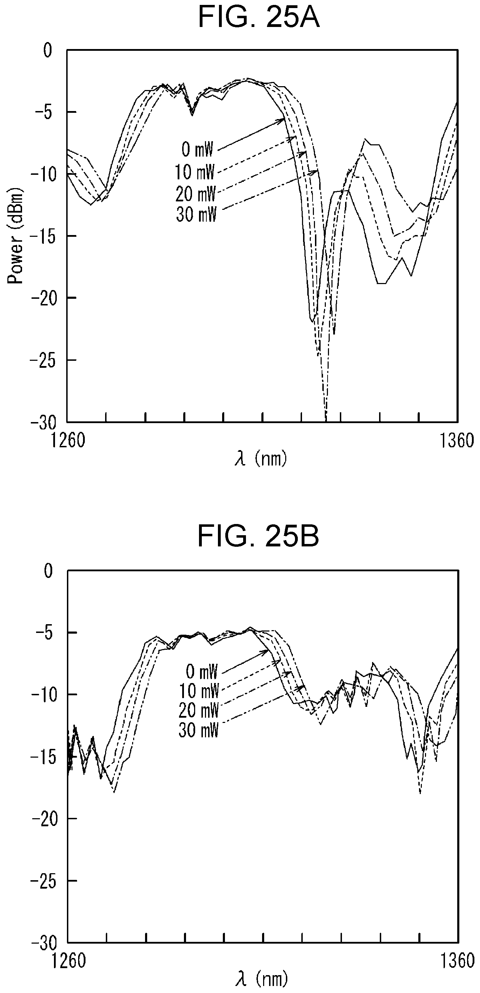

Specifically, as illustrated in FIGs. 25A and 25B, the wavelength characteristics of the wavelength multiplexing/demultiplexing element vary depending the power consumption of the resistance elements 180. FIG. 25A illustrates the wavelength characteristics of the wavelength multiplexing/demultiplexing element when the waveguides 140 of the wavelength multiplexing/demultiplexing element are strip-type waveguides. FIG. 25B illustrates the wavelength characteristics of the wavelength multiplexing/demultiplexing element when the waveguides 140 of the wavelength multiplexing/demultiplexing element are rib-type waveguides. In FIGs. 25A and 25B, the horizontal axis represents wavelength. The units of wavelength are nm (nanometers). The vertical axis represents power. The units of power are dBm (decibel milliwatt). The larger the value on the vertical axis is (as the plot of the graph rises), the smaller the loss is.

In FIGs. 25A and 25B, the solid-line graph represents the wavelength characteristics when the power consumption of the resistance element 180 is 0 mW (milliwatts). In other words, the solid-line graph represents the wavelength characteristics when no current is flowing through the resistance element 180. The dashed-line graph represents the wavelength characteristics when the power consumption of the resistance element 180 is 10 mW (milliwatts). The single-dot dash-line graph represents the wavelength characteristics when the power consumption of the resistance element 180 is 20 mW (milliwatts). The two-dot dash-line graph represents the wavelength characteristics when the power consumption of the resistance element 180 is 30 mW (milliwatts). As illustrated in FIGs. 25A and 25B, the wavelength characteristics of the wavelength multiplexing/demultiplexing element are adjusted in accordance with the power consumption of the resistance element 180. The current to be supplied to the resistance element 180 in the wavelength multiplexing/demultiplexing element may be determined in accordance with manufacturing tolerances or ambient conditions.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts. Please understand that the scope of the present disclosure also includes these forms.

In the present disclosure, "first", "second", and so on are identifiers used to distinguish between such configurations. Regarding the configurations, "first", "second", and so on used to distinguish between the configurations in the present disclosure may be exchanged with each other. For example, identifiers "first" and "second" may be exchanged between the first element 831-1 and the second element 831-2. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

In the present disclosure, the X-axis, the Y-axis, and the Z-axis are provided for convenience of explanation and may be interchanged with each other. The configurations of the present disclosure have been described using a Cartesian coordinate system consisting of the X-axis, the Y-axis, and the Z axis. The positional relationship between configurations in the present disclosure is not limited to a Cartesian relationship.

In an embodiment, (1) an optical integrated circuit includes wavelength multiplexing/demultiplexing elements, each wavelength multiplexing/demultiplexing element including a directional coupler and a delay line, and the wavelength multiplexing/demultiplexing elements are connected to each other in a cascade-like manner in multiple stages.

(2) In the optical integrated circuit of (1) above, the wavelength multiplexing/demultiplexing elements may be connected in four stages.

(3) In the optical integrated circuit of (1) or (2) above, the wavelength multiplexing/demultiplexing elements connected later than a first stage may each include an output port on a straight side of the directional coupler.

(4) In the optical integrated circuit of any one of (1) to (3) above, a first composite element and a second composite element are connected to each other in a cascade-like manner, the wavelength multiplexing/demultiplexing elements in the first composite element being connected to each other in N stages and the wavelength multiplexing/demultiplexing elements in the second composite element being connected to each other in M stages.

(5) In the optical integrated circuit of (4) above, the wavelength multiplexing/demultiplexing elements connected from the second stage to an Nth stage or from an N+2th stage to an N+Mth stage may each include an output port on the straight side of the directional coupler.

(6) In the optical integrated circuit of any one of (1) to (5) above, the optical integrated circuit may be formed using silicon photonics technology.

(7) In the optical integrated circuit of any one of (1) to (6) above, the wavelength multiplexing/demultiplexing elements may each include a waveguide positioned on a substrate and a resistance element configured to change a temperature of at least part of the waveguide.

(8) In the optical integrated circuit of (7) above, at least part of the resistance element may be positioned to overlap at least part of the waveguide in plan view of the substrate.

(9) In the optical integrated circuit of (7) or (8) above, the resistance element may contain titanium nitride.

In an embodiment, (10) an optical receiver includes the optical integrated circuit of any one of (1) to (9) above.

REFERENCE SIGNS

1 optical receiver (81: input unit, 82: polarization splitter rotator (PSR), 822: polarization splitter (PS), 83: demultiplexer (DEMUX), 831-1 to 3: first to third elements of first group, 832-1 to 6: first to sixth elements of second group, 84: delayer, 85: variable optical attenuator (VOA))
10 photodiode
140 waveguide
150 substrate (151: insulating layer, 152: cladding layer)
170 delay line
180 resistance element

**Claims**

1. An optical integrated circuit comprising:
   wavelength multiplexing/demultiplexing elements each including a directional coupler and a delay line,
   wherein the wavelength multiplexing/demultiplexing elements are connected to each other in a cascade-like manner in multiple stages.

2. The optical integrated circuit according to claim 1, wherein the wavelength multiplexing/demultiplexing elements are connected to each other in four stages.

3. The optical integrated circuit according to claim 1, wherein the wavelength multiplexing/demultiplexing elements connected later than a first stage may each include an output port on a straight side of the directional coupler.

4. The optical integrated circuit according to claim 1, wherein a first composite element and a second composite element are connected to each other in a cascade-like manner, the wavelength multiplexing/demultiplexing elements in the first composite element being connected to each other in N stages and the wavelength multiplexing/demultiplexing elements in the second composite element being connected to each other in M stages.

5. The optical integrated circuit according to claim 4, wherein the wavelength multiplexing/demultiplexing elements connected from the second stage to an Nth stage or from an N+2th stage to an N+Mth stage each include an output port on a straight side of the directional coupler.

6. The optical integrated circuit according to any one of claims 1 to 5, wherein the optical integrated circuit is formed using silicon photonics technology.

7. The optical integrated circuit according to any one of claims 1 to 5, wherein the wavelength multiplexing/-demultiplexing elements each include a waveguide positioned on a substrate and a resistance element configured to change a temperature of at least part of the waveguide.

8. The optical integrated circuit according to claim 7, wherein at least part of the resistance element is positioned to overlap at least part of the waveguide in plan view of the substrate.

9. The optical integrated circuit according to claim 8, wherein the resistance element may contain titanium nitride.

10. An optical receiver comprising:
    the optical integrated circuit according to any one of claims 1 to 5.

# FIG. 1

1

```
                    ┌─────────────────────┐
                    │    INPUT UNIT       │ ～ 81
                    └─────────────────────┘
                              │
                    ┌─────────────────────┐
                    │        PSR          │ ～ 82
                    └─────────────────────┘
                       │              │
                      TE           TM→TE
          83                                        83
    ┌──────────────┐                        ┌──────────────┐
    │    DEMUX     │                        │    DEMUX     │
    └──────────────┘                        └──────────────┘
     λ1   ･･･   λn                           λ1   ･･･   λn

                        10-1(10)
                    ┌─────────────────────┐
                    │        PD           │
                    └─────────────────────┘
                              ⋮
                    ┌─────────────────────┐
                    │        PD           │
                    └─────────────────────┘
                        10-n(10)
```

# FIG. 2

1

EDGE COUPLER — 811

PSR — 82

TE     TM→TE

83     83

DEMUX     DEMUX

λ1  • • •  λn     λ1  • • •  λn

10-1 (10)

PD

⋮

PD

10-n (10)

# FIG. 3

# FIG. 4

# FIG. 5

# FIG. 6

# FIG. 7A

# FIG. 7B

# FIG. 8

EP 4 589 349 A1

FIG. 9

FIG. 10

EP 4 589 349 A1

## FIG. 11

## FIG. 12

## FIG. 13

## FIG. 14

# FIG. 15

# FIG. 16

# FIG. 17

# FIG. 18

## FIG. 19

## FIG. 20

# FIG. 21

# FIG. 22

FIG. 23

# FIG. 24

140

180

X
Y Z

## FIG. 25A

## FIG. 25B

## INTERNATIONAL SEARCH REPORT

| International application No. |
|---|
| **PCT/JP2023/032143** |

| A. | CLASSIFICATION OF SUBJECT MATTER |
|---|---|

*G02B 6/12*(2006.01)i; *G02B 6/125*(2006.01)i; *G02B 6/42*(2006.01)i
FI:   G02B6/12 331; G02B6/125 301; G02B6/12 361; G02B6/12 301; G02B6/42

According to International Patent Classification (IPC) or to both national classification and IPC

| B. | FIELDS SEARCHED |
|---|---|

Minimum documentation searched (classification system followed by classification symbols)

G02B6/12; G02B6/125; G02B6/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-135524 A (FUJITSU LTD) 15 August 2019 (2019-08-15) paragraphs [0025]-[0027], [0039]-[0042], [0051]-[0073], fig. 4, 6-7 | 1-8, 10 |
| Y | | 3, 5, 9 |
| Y | JP 2013-210474 A (OKI ELECTRIC IND CO LTD) 10 October 2013 (2013-10-10) paragraph [0048] | 3, 5 |
| Y | JP 2016-212265 A (NIPPON TELEGRAPH & TELEPHONE) 15 December 2016 (2016-12-15) paragraph [0021], fig. 3 | 7-9 |
| X | JP 2020-194092 A (FUJITSU LTD) 03 December 2020 (2020-12-03) paragraphs [0013]-[0015], [0033], [0065]-[0072], [0094]-[0095], fig. 1, 11, 23 | 1-6, 10 |
| Y | | 7-9 |
| A | US 2009/0220228 A1 (MASSACHUSETTS INSTITUTE OF TECHNOLOGY) 03 September 2009 (2009-09-03) entire text, all drawings | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032143**

| Patent document cited in search report | | | Publication date (day/month/year) | Patent family member(s) | | | Publication date (day/month/year) |
|---|---|---|---|---|---|---|---|
| JP | 2019-135524 | A | 15 August 2019 | US 2019/0245642 A1 paragraphs [0066]-[0068], [0080]-[0083], [0092]-[0114], fig. 4, 6A-7 | | | |
| JP | 2013-210474 | A | 10 October 2013 | (Family: none) | | | |
| JP | 2016-212265 | A | 15 December 2016 | (Family: none) | | | |
| JP | 2020-194092 | A | 03 December 2020 | (Family: none) | | | |
| US | 2009/0220228 | A1 | 03 September 2009 | WO 2007/014218 A2 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022148602 A
- JP 2022197478 A
- JP 2020194092 A